# EUROPEAN PATENT SPECIFICATION

(11) **EP 3 386 922 B1**
(45) Date of publication and mention of the grant of the patent: **27.11.2024**
(21) Application number: 16788101.0
(22) Date of filing: 27.10.2016
(51) Int. Cl.: C02F 1/00, C02F 1/28, C02F 1/42

(54) **CARTRIDGE FOR A FLUID TREATMENT SYSTEM AND USE THEREOF**
KARTUSCHE FÜR EIN FLÜSSIGKEITSBEHANDLUNGSSYSTEM UND VERWENDUNG DAVON
CARTOUCHE DESTINÉE À UN SYSTÈME DE TRAITEMENT DE FLUIDE ET SON UTILISATION

(30) Priority: 10.12.2015 EP 15199383
(43) Date of publication of application: 17.10.2018
(73) Proprietor: BRITA SE, 65232 Taunusstein (DE)
(72) Inventor: WALDE, Hilmar, 65232 Taunusstein (DE); FLOREN, Simon, 65232 Taunusstein (DE)
(86) International application number: PCT/EP2016/075998
(87) International publication number: WO 2017/097494

(56) References cited:
- EP-A1- 1 992 400
- EP-A1- 2 902 367
- EP-A1- 2 910 529
- EP-A2- 0 617 951
- EP-B1- 1 536 875
- WO-A1-2016/066804
- US-A- 2 224 577
- US-A1- 2012 055 862
- US-A1- 2014 131 264
- US-A1- 2015 041 385

## Description

The invention relates to a cartridge for a fluid treatment system in accordance with the pre-amble of claim 1.

The invention also relates to a use of such a cartridge.

The invention also relates to a fluid treatment system.

US 2,224,577 discloses a filter assembly including a removable cartridge of cylindrical shape. The cartridge comprises a porous cylindrical bag, preferably of thin fabric, charged with granular activated carbon or other suitable filtering material. The grade of filtering material and mesh of the top and bottom of the bag are such as to normally allow the water to pass through with comparative freedom. Any supporting structure, illustrated by a spider, may be placed under the cartridge.

US 2012/0055862 A1 discloses a filtering water bottle for use in filtering water as it enters the filtering water bottle. The filtering water bottle includes a filter attached proximate an opening of the bottle. The filter includes filter media. In one embodiment, the filter includes a housing, a distal or first end and a proximal or second, opposite end. In one embodiment, the filter housing is comprised of a rigid material. In one embodiment, all of the filtration media, such as activated carbon and filtration pellets, is contained within a filter bag of the filter. In one embodiment, the filter bag is made out of a porous and flexible mesh material designed to pass water without restricting its flow. In one embodiment, the filter bag has a filter screen secured into the open end. The filter screen may be secured to the filter bag by various techniques including interference fit, snap fit, adhesive, sonic welding, spin welding or heat welding. In one embodiment, the filter bag is inserted into the filter housing and may be secured in place by various mechanisms. One such mechanism is to seat the filter screen into a groove designed to hold it in place non-permanently. If needed, the filter bag can, in one embodiment, be removed and replaced when the filter elements become saturated.

Other cartridges or filter bags are known from the prior art, as in US 2015/041385, EP 2 910 529 A1, EP 2 902 367 A1, US 2 224 577 A, WO 2016/066804 A1, US 2012/055862 A1.

A problem of the filter bag and screen is that it requires support at the second, downstream, end. The filter bag would otherwise sag, in particular in the middle. This would lead it to become detached from the surrounding side wall, opening up a bypass. The screen might also deform, leading to the bag dropping out of the filter housing. In any case, more material is required to manufacture the filter housing.

It is an object of the invention to provide a fluid treatment cartridge, use thereof and a fluid treatment system that make use of relatively little material whilst enabling the cartridge to perform effectively.

This object is achieved according to a first aspect by the fluid treatment cartridge according to claim 1.

The cartridge includes a housing encapsulating matter including at least one fluid treatment medium. The encapsulated matter is dimensionally unstable, i.e. having no fixed shape as a collective. The matter may be loose matter. The loose matter can be particulate or fibrous matter, or a mixture of the two. This matter can be relatively fine, as will be explained, thus presenting a relatively large surface area and forming relatively small voids. Alternatively, the encapsulated matter may be relatively loosely bound particulate or fibrous matter, e.g. reticulated matter. The housing encapsulates also any particulates that have become detached. The housing thus separates the matter including the at least one fluid treatment medium from the environment. The housing includes fluid-pervious sections allowing fluid to pass through the housing to contact the fluid treatment medium. Thus, the fluid is treated on its way through the housing by contacting the fluid treatment medium or media. At least one section of the housing is formed by at least one membrane. Where the housing is formed by at least one membrane, only a membrane or overlapping membranes separates or separate the matter including the at least one fluid treatment medium from the environment. A membrane is a pliable sheet-like structure acting as a boundary lining. It is made of sheet material, requiring relatively little material compared to a stiff, moulded housing. Furthermore, the housing parts formed by one or more membranes can be manufactured in a relatively environmentally-friendly and economical manner compared to e.g. injection-moulded housing components. When the cartridge is recycled at the end of its lifetime, there is less waste to be disposed of. Recycling is in any case easier, because it is easier to open up the cartridge housing than would be the case for a cartridge housing made of relatively stiff, dimensionally stable parts. The membrane or membranes can instead be cut or torn open.

At least one fluid-pervious section of the housing includes at least a fluid-pervious component including a porous body. The porous body is self-supporting and stiff enough to support the remainder of the cartridge. The fluid-pervious section of the housing including the fluid-pervious component can thus be the downstream end of the cartridge. Sagging in the middle is prevented. Insofar as the upstream section of the cartridge sags, it will sag outwards, e.g. against a surrounding wall of the cartridge seat. The fluid-pervious component including the porous body need only be supported by the cartridge seat at its edges. A lattice or grille downstream of the cartridge for supporting the cartridge can thus be dispensed with. Furthermore, the porous body acts as a depth filter, so that the encapsulated matter can comprise relatively small particles. This increases the effectiveness of the fluid treatment for a given cartridge volume. Also, a depth filter has a relatively low risk of becoming clogged. Treatment rates are thus maintained relatively well over the lifetime of the cartridge. In summary, the proposed cartridge is based on the realisation that a bag-like structure encapsulating a quantity of matter with no fixed shape as a collective should be closed by a relatively stiff fluid-permeable part at its downstream end to make it function and save on material, and on the further realisation that such is most effective when this part includes a porous body.

In an embodiment, the fluid-pervious component protrudes radially with respect to an axially adjoining section of the housing.

This allows the cartridge to be held in the seat by the protruding part or parts without obstructing the flow through the fluid-pervious component. The protruding part or parts may be clamped, since the porous body reinforces the fluid-pervious component. It may alternatively be held merely by means of a shape-lock. The fluid-pervious component may protrude along an entire edge thereof or only at at least one, e.g. multiple, locations.

In a variant of this embodiment, the axially adjoining section is made of sheet material for forming at least one of the at least one membranes, and the sheet material extends to cover a surface facing in axial direction of at least one protruding part of the fluid-pervious component.

The protruding part thus increases the surface area available for attaching the sheet material to the fluid-pervious component. The sheet material will generally be bonded adhesively or joined by (ultrasonic or thermal) welding. The protruding part or parts is or are not required to let fluid pass into or out of the interior of the cartridge housing, so that it or they can be covered with the sheet material.

In a particular variant hereof, the cartridge is provided with a support ring, wherein the sheet material covering the surface is sandwiched between the support ring and the protruding part of the fluid-pervious component.

This helps prevent the sheet material from becoming detached, e.g. during handling of the cartridge in transit between a supplier and a user. The support ring may be a detachable support ring provided specifically for preventing detachment during transport. Another use would be to reinforce the protruding part of the fluid-pervious component if it is clamped in place in the cartridge seat.

The fact that the fluid-pervious component is provided at an axial end of the housing, and at least an axially adjoining section of the housing, closed on itself around the axis, is formed only by at least one membrane allows the cartridge housing to be compressed axially to pack the encapsulated, e.g. loose, matter tightly and prevent channelling. If the adjoining section extends to an opposite axial end of the cartridge housing, then assembly is simplified and little housing material is required. This makes the cartridge more suited to being recycled after use.

In an embodiment of the cartridge, the axially adjoining section of the housing is impervious to fluid.

An effect is to force fluid to flow in axial direction through the interior of the cartridge housing. Shortcuts through the side walls are prevented. The flow pattern is relatively uniform, leading to uniform treatment of the fluid. The fluid-pervious component will generally form the outlet of the cartridge housing. A fluid-pervious section, e.g. a fluid-pervious membrane section, forming an inlet may be provided only at an opposite axial end of the cartridge housing.

In an embodiment, the sections of the housing made of at least one membrane are formed from a single sheet of membrane material.

This embodiment is economical to manufacture. There is no need to join multiple sheets at their edges. The single sheet can be formed into a sack or sachet, e.g. by deep drawing. The fluid-pervious component may close the sack or be inserted into the sachet before it is closed.

Thus, in an embodiment, the cartridge housing comprises a sachet made of a single sheet of material for forming the at least one membrane.

In this context, the sachet is a sealed bag that encases the encapsulated (loose) matter and the fluid-pervious component. Edges of the sheet material are joined together to seal the sachet, which may be made of fluid-pervious material or perforated in sections to define an inlet and an outlet section. The fluid-pervious component is placed against an interior surface of the sheet material, thus shielding it. This may be useful where the porous body is relatively brittle. If the shielding by the sheet material is adequate, the fluid-pervious component may consist only of the porous body.

Thus, in an embodiment of the cartridge, the fluid-pervious component, e.g. the porous body, has a surface directed away from the encapsulated matter and covered by sheet material for forming at least one of the at least one membranes.

An embodiment of the cartridge is obtainable by forming a sack of sheet material for forming at least one of the at least one membranes, at a bottom of which is located the fluid-pervious component.

To produce this embodiment, sheet material, e.g. a single sheet thereof, is first formed into a sack. The fluid-pervious component is placed at the bottom of the sack, whereupon it is filled with the matter including at least one fluid treatment medium. The sack is then closed at its mouth, e.g. by joining an edge or edges of the sheet material together.

An alternative embodiment is obtainable by forming a sack of sheet material for forming at least one of the at least one membranes, the sack having an opening in which the fluid-pervious component is located.

To produce this embodiment, sheet material, e.g. a single sheet thereof, is first formed into a sack. The sack is filled with matter including at least one fluid treatment medium. The fluid-pervious component is then placed on top in the opening. It may be joined to the sheet material so as to close the opening. The sheet material may alternatively extend to cover the surface of the fluid-pervious component opposite a surface exposed to an interior of the cartridge housing.

Thus, in a variant of this embodiment, the sheet material extends to cover at least part of at least one surface of the fluid-pervious component, e.g. at least part of at least one surface of the porous body, directed away from the encapsulated matter.

This shields the fluid-pervious component and provides a large surface for bonding the sheet material to the fluid-pervious component.

In an embodiment of the cartridge, the porous body is made of bonded matter, e.g. thermally bonded matter.

The porous body thus includes a binder. The binder holds the matter making up the porous body together. This type of porous body can be provided with a relatively high porosity. If the bonded matter is particulate matter, point-bonds keep the porous body together, defining relatively large voids.

In an embodiment, the porous body includes a thermoplastic binder.

This embodiment allows sheet material to be joined to the fluid-pervious component without the use of adhesives. The application of heat makes the binder become tacky. Suitable binders include ultra-high density polyethylene. Further details of suitable manufacturing methods are provided in StrauB, S., "Gesinterte Kunststoff-Formteile für die Fest-/Flüssig-Filtration", Technische Mitteilungen, 85(2), July 1992, pp. 100-104.

In an embodiment of the cartridge, the porous body is bonded to at least one of the at least one membranes.

This keeps the fluid-pervious component in place.

In an embodiment of the cartridge, the porous body includes at least one fluid treatment medium for the treatment of fluid in a diffusive process.

The process may be elution or sorption, including ion exchange. An example of a fluid treatment medium for this purpose is activated carbon. The porous body is self-supporting due to its structure, but the volume it takes up is used relatively efficiently by also putting the porous body to use in the treatment of the fluid.

In an embodiment of the cartridge, the porous body has a planar shape.

In this embodiment, the porous body can be produced relatively efficiently by separating (punching, sawing or cutting by means of a laser) it from a sheet or plate of bonded matter, obtainable by compacting and heating the matter in a relatively simply shaped press. Such a sheet or plate can be manufactured continuously or quasi-continuously. Moreover, such a sheet or plate can be covered on one or both sides by a sheet of fluid-pervious sheet material before the separating step. This avoids the need to align small pieces of sheet material with the porous body to form the fluid-pervious component. Another effect of the planar shape is that it allows the thickness to be essentially uniform and the flow to be through the planes of the porous body. This results in relatively uniform flow through the fluid treatment cartridge.

According to another aspect, the invention provides for the use of a fluid treatment cartridge according to the invention, such that the fluid-pervious section of the housing including the fluid-pervious component forms the downstream end of the cartridge.

The porous body is self-supporting and strong enough to support the remainder of the cartridge on top of it. There is thus no need to place it on a lattice. It can be mounted in an opening, e.g. by its edges. If it is mounted at an end of a tubular structure, then the flexible part of the cartridge housing on top of the fluid-pervious component will be pressed against the interior surface of the tubular component, so that the fluid is forced through the cartridge.

According to another aspect, the fluid treatment system according to the invention includes:
- A device for forming a fluid treatment system according to the invention includes a seat for holding a cartridge according to the invention, wherein the cartridge seat is arranged to hold the cartridge in a position in which the fluid-pervious component forms the downstream end of the cartridge, and
- a replaceable fluid treatment cartridge according to the invention.

Said device can be relatively simple. It requires in essence a structure defining an opening in which the fluid-pervious component can be held, so that fluid is forced to flow through at least the fluid-pervious component.

An embodiment of the device includes at least one clamping mechanism for holding the fluid treatment cartridge.

The parts that clamp the fluid treatment cartridge both hold it in place and provide seals preventing bypasses around the fluid treatment cartridge.

In a variant of this embodiment, the clamping mechanism is arranged to exert forces from opposite sides on a section of the cartridge housing including at least part of the fluid-pervious component.

The fluid-pervious component, being self-supporting and relatively rigid, is better able to withstand the clamping force than e.g. the section of the fluid treatment cartridge housing formed by the membrane or membranes.

In a variant of the embodiment of the device including at least one clamping mechanism for holding the fluid treatment cartridge, the cartridge seat includes a first part, a second part and a mechanism for advancing the second part in an axial direction towards the first part, wherein the first and second parts are provided with respective parts for supporting regions of opposing surfaces of the cartridge housing at respective lateral edges thereof.

The cartridge will generally be inserted axially into the cartridge seat through an opening. For this, some lateral clearance is required, but there should be no bypasses once the cartridge is in place. This embodiment makes this relatively easy to achieve.

An embodiment of the device includes a part defining a chamber for receiving at least part of the fluid treatment cartridge, provided with at least one fluid-permeable window at one axial end and at least one fluid-permeable window at an opposite axial end, the part including a section presenting an impervious interior surface closed on itself around the axis for supporting a section of the housing of the fluid treatment cartridge laterally.

In this embodiment, the membrane or membranes can be pressed against the impervious interior surface laterally, so that bypasses of fluid through the sides of the fluid treatment cartridge can be prevented. The device may include a mechanism for compressing at least a section of the cartridge housing axially, so that it expands laterally against the impervious interior surface. An additional effect is that the (loose) matter encapsulated by the housing does not end up on one side of the housing when the device is tilted, e.g. to pour liquid from it. In contrast to a housing with only rigid walls, the section formed by the at least one membrane can be compressed to prevent channelling past the encapsulated matter including at least one fluid treatment medium.

An embodiment of the device includes a separation part for separating a reservoir of fluid to be treated from a downstream section of the fluid treatment system, wherein the cartridge seat forms a passage through the separation part between the reservoir and the downstream section.

This embodiment is suitable for forming a gravity-driven liquid treatment system or one with a suction pump for emptying a tank forming a reservoir of liquid to be treated.

The invention will be explained in further detail with reference to the accompanying drawings, in which:
- Fig. 1: is a schematic drawing of a gravity-driven liquid treatment system including a seat for receiving a liquid treatment cartridge;
- Fig. 2: is a schematic cross-sectional view of part of a seat for receiving the liquid treatment cartridge;
- Fig. 3: is a perspective view of a holding ring forming a further part of the seat;
- Fig. 4: is a schematic view of a liquid treatment cartridge for the system of Figs. 1-3;
- Fig. 5: is a cross-sectional view of detail A in Fig. 4 in a first variant of the liquid treatment cartridge;
- Fig. 6: is a cross-sectional view of detail A in Fig. 4 in a second variant of the liquid treatment cartridge;
- Fig. 7: is a cross-sectional view of detail A in Fig. 4 in a third variant of the liquid treatment cartridge; and
- Fig. 8: is a cross-sectional view of detail B in Fig. 5 in one embodiment of the liquid treatment cartridge.

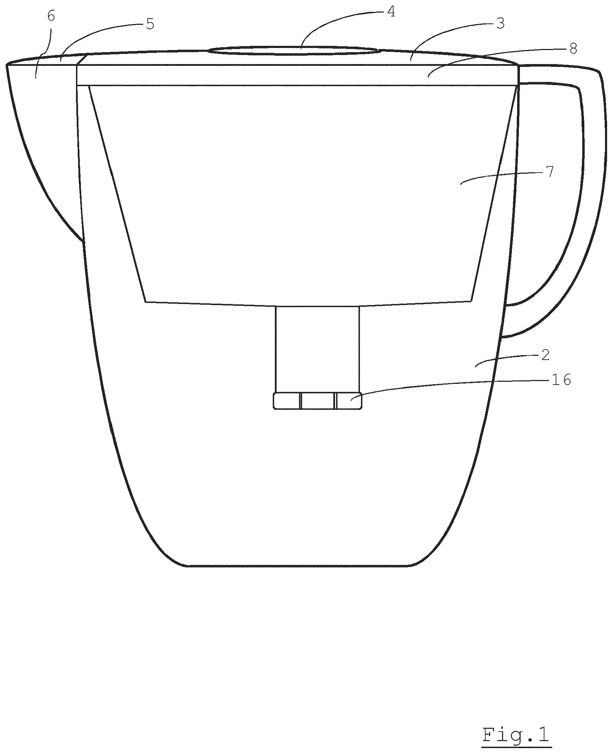

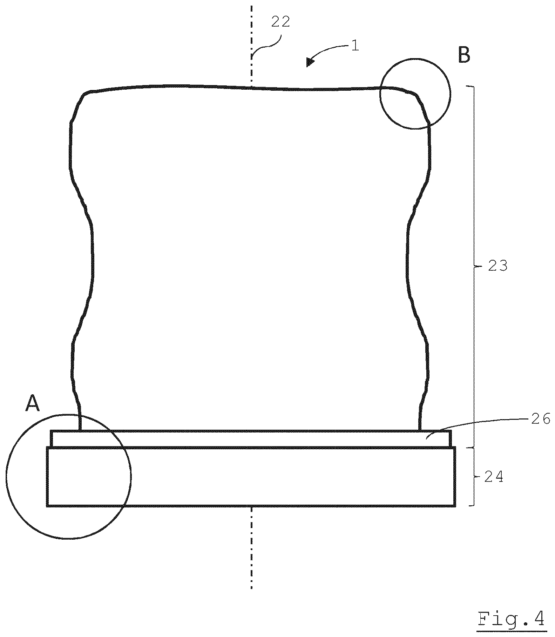

A gravity-driven liquid treatment system for the treatment of aqueous liquids such as drinking water will be used as an example to describe a liquid treatment cartridge 1 (Fig. 4) and a seat for receiving it. In the illustrated example, the liquid treatment system further includes a jug 2 (Fig. 1). In other embodiments, the liquid treatment system may include a different kind of vessel for collecting treated liquid, e.g. a carafe or a tank with a spigot for dispensing treated liquid.

The jug 2 is provided with a lid 3 with a fill opening closed by a closure part 4. Liquid to be treated can be poured in through the fill opening without removing the lid 3. A pivotable cover part 5 closes the mouth of a spout 6 from which treated liquid can be poured.

A vessel for forming a reservoir of liquid to be treated is provided in the shape of a funnel 7. The funnel 7 is suspended in the jug 2, e.g. with a rim of the funnel 7 supported by a ledge 8 formed at a mouth of the jug 2.

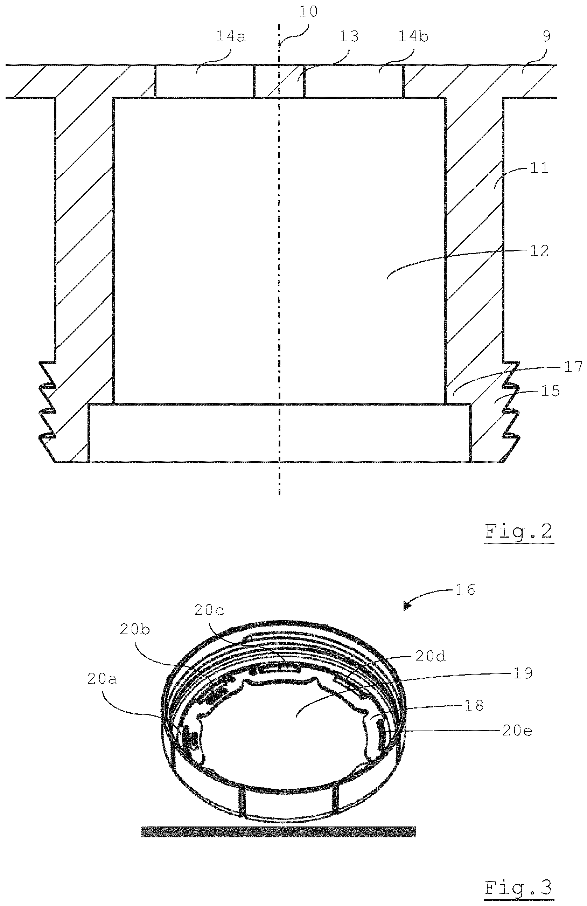

The funnel 7 forms a separation part for separating an upstream part of the system in the form of the reservoir in the funnel 7 from a downstream part in the form of the lower section of the interior of the jug 2. A connection between the two is provided via an extension of a bottom wall 9 (Fig. 2) of the funnel 7. The extension includes a seat for receiving the liquid treatment cartridge 1.

It is possible to define a reference axis 10 extending in the direction of flow of liquid passing through the cartridge seat.

In the illustrated embodiment, the seat includes a tubular section 11 forming an appendage protruding downwards with respect to a remainder of the bottom wall 9 of the funnel 7. The tubular section 11 also forms a cartridge chamber 12 for receiving part of the liquid treatment cartridge 1.

The tubular section 11 extends in axial direction. In the illustrated embodiment, the tubular section 11 is an integral part of the funnel 7. In another embodiment, it may be separable therefrom. In the illustrated embodiment, the cartridge chamber 12 has a circle-cylindrical shape. It may be cylindrical with a different cross-sectional shape in another embodiment.

In the illustrated embodiment, the cartridge chamber 12 is partly defined by a screen 13 at an axial end opposite a mouth of the cartridge chamber 12. Apertures 14a,b form liquid-permeable windows allowing liquid from the reservoir of liquid to be treated to enter the cartridge chamber 12, in use. The liquid treatment cartridge 1 can be pressed against the screen 13 in axial direction, as will be explained. In an alternative embodiment, a single cross-bar extends across the opening into the cartridge chamber 12 to fulfil this function. In yet another embodiment, a structure with this function is dispensed with, so that the opening into the cartridge chamber 12 is unobstructed. Alternatively, only a shoulder may protrude radially into the opening along its edge to define a shoulder against which an axial end of the liquid treatment cartridge 1 can be pressed.

The tubular section 11 terminates at an axial end distal to the bottom wall 9 in a section 15 with a screw thread on its exterior for cooperating with an interior thread on a mounting ring 16 (Fig. 3). On the inside, the cartridge chamber 12 widens at its mouth to define a shoulder 17 (Fig. 2).

The mounting ring 16 (Fig. 3) has a radially inwardly directed rim 18 defining an aperture 19. In the illustrated embodiment, protrusions 20a-e are provided on an interior surface of the rim 18. These protrusions 20 protrude in axial direction, the direction in which the interior surface of the rim 18 on which they are provided faces. The protrusions 20a-e are provided to support the liquid treatment cartridge 1.

The liquid treatment cartridge 1 (Figs. 4-8) includes a housing encapsulating loose matter including at least one liquid treatment medium 21. The housing separates the liquid treatment medium 21 from the environment.

In the illustrated embodiment, the loose matter forming the liquid treatment medium 21 is granular in nature. In another embodiment, it may include fibrous matter or a mixture. The matter forming the liquid treatment medium 21 may alternatively be provided as a reticulated medium in the shape of a foam, as e.g. disclosed at http://cuzn.com/cuzn/wp-content/uploads/2015/03/Coconut-Carbon-New-Spec-Formwater-Focus.pdf, accessed on 27 October 2015.

The liquid treatment medium 21 in one example includes ion exchange resin, more particularly weakly acidic cation exchange resin. The resin is at least partly in the hydrogen form, at least initially. At least one fraction may be loaded with an alkali metal or earth alkali metal ion species, at least initially.

More generally, at least one liquid treatment medium 21 is for the treatment of liquid in a diffusive process, e.g. elution or sorption (which for present purposes includes ion exchange). Thus, it may include activated carbon, activated aluminium, a zeolite, KDF (an alloy of copper and zinc), etc.

It is possible to define a reference axis 22 of the cartridge (Fig. 4). This cartridge axis 22 is essentially aligned with the cartridge seat axis 10 when the liquid treatment cartridge 1 is in place in the cartridge seat.

An axial section 23 of the housing situated upstream, in use, is formed by at least one membrane made of sheet material. The sheet material may be foil or textile. The textile may a woven or non-woven textile.

An axial section 24 situated downstream, in use, includes a liquid-pervious component including at least a porous body 25. The porous body is made of thermally bonded matter. It thus includes at least a binder. In one embodiment, the binder is a thermoplastic binder, e.g. ultra-high molecular weight polyethylene. The thermally bonded matter is particulate matter, with the particles being point-bonded to define interstices forming the pores of the porous body. The melting point of the binder (determined using differential scanning calorimetry) is at least 120° C, e.g. in the range of 120-150°C. The binder is thermally stable to at least 300° C.

The binder particles may have a mean diameter larger than that of the particles of the active material, so that the pore size is relatively large but the active material presents a relatively large surface area.

Typically, the mean pore size (measured by determining the Mean Flow Path) in the majority of the porous body 25 will be larger than 2 µm, in particular larger than 5 µm. The mean pore size will generally be smaller than 100 µm. Essentially all pores will have a pore size below 100 µm. In an example, the particulate matter used to form the porous body 25 includes material for the treatment of liquid in a diffusive process, in particular a sorbent such as activated carbon.

The porous body 25 has a porosity larger than 20 %, in particular larger than 30 % or even larger than 40 %. The porosity will generally be smaller than 80 %, in particular smaller than 70 %, more particularly smaller than 60 %.

The porous body 25 may have a sandwich structure with multiple porous layers. At least one of its porosity and its mean pore size may show a gradient, e.g. in axial direction. Also, the porosity may be lower at the radial edge of the porous body.

One or both of the major surfaces (facing in axial direction), in particular the major surface facing away from the liquid treatment medium 21 in use, may be covered by a sheet of liquid-pervious material (not shown), e.g. non-woven textile material, to capture any particles that detach themselves from the porous body 25. This allows for relatively loose binding of the particulate matter making up the porous body. In such an embodiment, the combination of the porous body 25 and the covering material forms the liquid-pervious component at the downstream axial end of the liquid treatment cartridge 1.

The porous body has a planar shape, having a thickness an order of magnitude smaller than its diameter. In the illustrated embodiment, the porous body 25 is disc-shaped. The thickness is essentially uniform. This provides for relatively uniform axial flow through the liquid treatment cartridge 1. If the cartridge axis 22 is also a longitudinal axis, i.e. the liquid-pervious component is provided at a longitudinal end of the liquid treatment cartridge 1, then the shape of the liquid treatment cartridge 1 will provide an optimum compromise between flow resistance and treatment time by the encapsulated liquid treatment medium 21.

The liquid-pervious component comprising the porous body 25 protrudes radially with respect to the adjoining upstream section 23 where it joins the downstream section 24. In the illustrated embodiment, it does so along the entire circumference. The liquid treatment cartridge 1 thus has a rim at its downstream end. In the illustrated embodiment, a support ring 26 is provided. The support ring 26 surrounds the upstream section 23 where it joins the downstream section 24 and rests on the protruding part.

To mount the liquid treatment cartridge 1, the mounting ring 16 is removed and the upstream section 23 is inserted into the cartridge chamber 12 in axial direction until the radially protruding part, in this embodiment the support ring 26, abuts the shoulder 17 in the cartridge chamber 12. The mounting ring 16 is then screwed on to clamp the liquid-pervious component including the porous body, and in this example also the support ring, between the shoulder 17 and the mounting ring protrusions 20a-e.

The screen 13 presses against the upstream section 23 of the liquid treatment cartridge to press this section against the interior surface of the tubular section 11. This helps prevent any bypass of liquid. In an embodiment, the liquid treatment medium also swells on contact with liquid, thus further pressing the at least one membrane forming the side of the cartridge housing against the interior surface of the tubular section 11, even without the aid of the screen. A similar effect can be obtained if the liquid treatment medium 21 has a higher density than the liquid to be treated, e.g. a higher density than water.

The sheet material forming the upstream section 23 of the liquid treatment cartridge is bonded to the porous body 25.

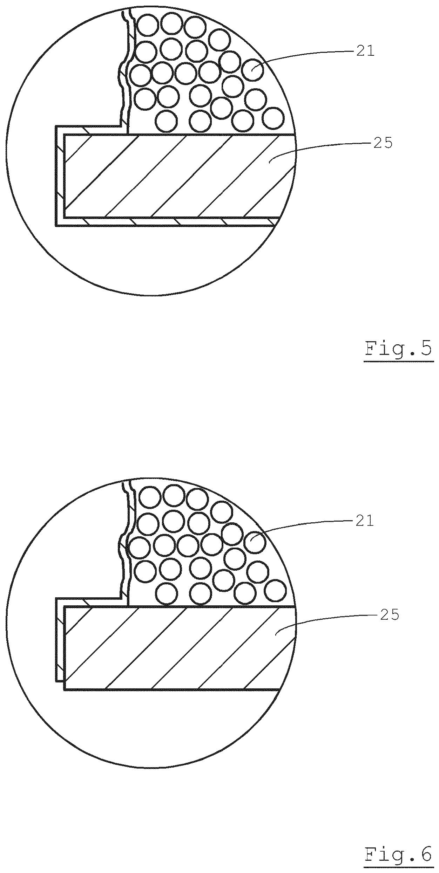

In one embodiment (Fig. 5), the sheet material is bonded to a radially outer section of the major surface of the porous body 25 facing in axial direction towards the liquid treatment medium 21. It also extends to cover the lateral surface of the porous body 25 and the entire outward-facing major surface of the porous body 25. This embodiment can be obtained by forming the sheet material into a sack. The porous body 25 is first placed at the bottom of the sack, which is then filed with the loose matter forming the liquid treatment medium 21, whereupon the sack is closed at the opposite axial end. In this embodiment, the porous body 25 need not be covered by a separate sheet of liquid-pervious material for retaining particles that break off from the porous body 25.

In another embodiment (Fig. 6), the sheet material is bonded to a radially outer section of the major surface of the porous body 25 directed towards the liquid treatment medium 21 and extends to cover at least part of the lateral surface of the porous body 25. The outward-facing major surface of the illustrated embodiment is left uncovered in the illustrated embodiment. In an alternative embodiment, the liquid-pervious component of which the porous body 25 forms a part includes at least a sheet of liquid-pervious material covering this major surface. This layer of sheet material is applied during manufacturing of the porous body 25 prior to assembly of the cartridge housing. This embodiment of the liquid treatment cartridge 1 is obtainable by forming the sheet material for forming at least one of the membranes of the cartridge housing into a sack, which is first filled with the loose matter forming the liquid treatment medium 21. The mouth of the sack is then closed by the porous body 25 or liquid-pervious component comprising it.

In a variant of the embodiment of Fig. 6 (not shown), the sheet material for forming at least one of the membranes of the cartridge housing extends to cover only a radially outer region of the major surface of the porous body 25 or liquid-pervious component comprising it. This helps protect the relatively vulnerable edge of the porous body.

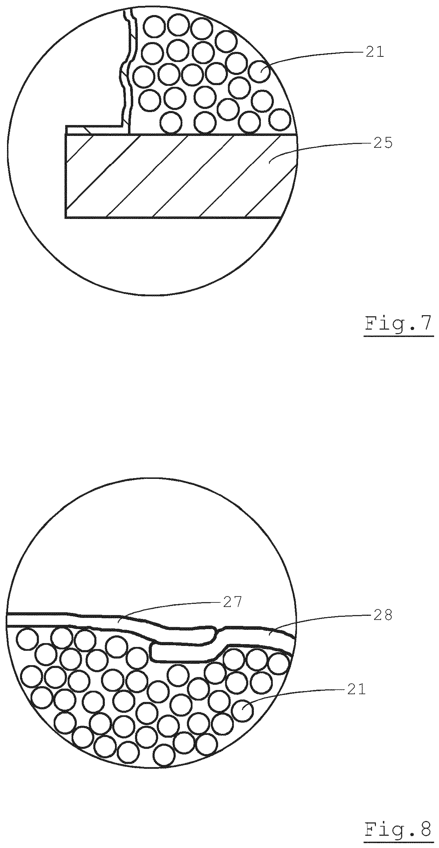

In another embodiment (Fig. 7), the sheet material for forming at least one of the membranes of the cartridge housing covers only a radially outer region of the major surface of the porous body 25 directed towards the liquid treatment medium 21. This embodiment may be obtained in the same way as the embodiment of Fig. 6.

In each of the embodiments, the cartridge housing may include only a single membrane, i.e. be made from a single piece of sheet material. In that case, liquid-pervious sheet material may be used, e.g. a woven or non-woven textile or a porous foil. Alternatively, the membrane may be perforated at an axial end opposite the axial end at which the porous body 25 is provided. Suitable foil material includes polyethylene and polypropylene. Suitable textile fibre material includes cellulose.

In another embodiment (Fig. 8), two pieces of sheet material are used. A first piece 27 of sheet material is liquid-pervious and forms a membrane section at an opposite axial end to the one at which the porous body 25 is provided. A second piece 28 of sheet material is impervious and forms at least the side wall of the liquid treatment cartridge 1. This piece 28 is thus joined to the porous body 25. A sealed joint is provided between the two pieces 27,28. This embodiment also provides good liquid treatment and relatively uniform flow if the liquid treatment cartridge 1 is not pressed against the interior surface of the tubular section 11. The first piece 27 of sheet material may be made of woven or non-woven textile, e.g. a natural fibre such as cellulose. The second piece 28 of sheet material may be made of foil, e.g. a plastic foil made of polyethylene or polypropylene. The first and second pieces 27,28 may be bonded adhesively or welded together (thermally or ultrasonically).

The liquid treatment cartridge 1 is relatively easy to recycle after use. The section 23 of the cartridge housing formed by the at least one membrane is easily cut or torn open wide enough to recover the loose matter relatively easily. The liquid treatment medium 21 can then be regenerated and/or reconditioned. The remainder of the liquid treatment cartridge 1 can be recycled thermally or shredded and separated into fractions. Certain fractions, such as the activated carbon in the porous body 25, can also be regenerated for subsequent use.

The invention is not limited to the embodiments described above, which may be varied within the scope of the accompanying claims. For example, the liquid treatment cartridge 1 may be used in other types of liquid treatment system than gravity-driven liquid treatment systems. An example would be a system including a reservoir of liquid to be treated and a suction pump for emptying the reservoir through the liquid treatment cartridge 1 when situated in a seat provided for it at an outlet of the reservoir or in a conduit leading away from the reservoir.

In an alternative embodiment, the support ring 26 is only used during transport and removed prior to inserting the liquid treatment cartridge 1 into its seat.

In yet another alternative embodiment, the downstream section 24 does not protrude radially with respect to the adjoining section of the upstream section 23. In this embodiment, the cartridge seat includes a resilient component that is compressed when the liquid treatment cartridge 1 is advanced axially into the cartridge seat, such that the resilient component is pressed radially against a lateral surface of the liquid treatment cartridge 1, e.g. a lateral surface of the downstream section 24.

It is also possible for the tubular section 11 to be shorter than the liquid treatment cartridge 1, so that at least part of the latter protrudes into the reservoir of liquid to be treated that is formed by the funnel 7.

### List of reference numerals

| | |
|---|---|
| 1 - | liquid treatment cartridge |
| 2 - | jug |
| 3 - | lid |
| 4 - | closure part |
| 5 - | cover part |
| 6 - | spout |
| 7 - | funnel |
| 8 - | ledge |
| 9 - | funnel bottom wall |
| 10 - | cartridge seat axis |
| 11 - | tubular section |
| 12 - | cartridge chamber |
| 13 - | screen |
| 14a,b - | screen aperture |
| 15 - | threaded section |
| 16 - | mounting ring |
| 17 - | shoulder |
| 18 - | mounting ring rim |
| 19 - | mounting ring aperture |
| 20a-e - | mounting ring protrusions |
| 21 - | liquid treatment medium |
| 22 - | cartridge axis |
| 23 - | upstream cartridge housing section |
| 24 - | downstream cartridge housing section |
| 25 - | porous body |
| 26 - | support ring |
| 27 - | first piece of sheet material |
| 28 - | second piece of sheet material |

## Claims

1. Cartridge for a fluid treatment system,
the cartridge including a housing encapsulating matter without a fixed shape as a collective, which matter includes at least one fluid treatment medium (21),
the housing including fluid-pervious sections allowing fluid to pass through the housing to contact the fluid treatment medium (21),
wherein at least one section (23) of the housing is formed by at least one membrane,
at least one fluid-pervious section (24) of the housing includes at least a fluid-pervious component provided at an axial end of the housing, and
at least an axially adjoining section (23) of the housing, closed on itself around the axis, is formed only by at least one membrane, **characterised in that**
the at least one fluid-pervious section (24) of the housing that includes at least the fluid-pervious component forms a downstream end of the cartridge, and **in that**
the fluid-pervious component includes a self-supporting porous body (25) stiff enough to support the remainder of the cartridge.

2. Cartridge according to claim 1,
wherein the fluid-pervious component protrudes radially with respect to an axially adjoining section (23) of the housing.

3. Cartridge according to claim 2,
wherein the axially adjoining section (23) is made of sheet material for forming at least one of the at least one membranes, and
wherein the sheet material extends to cover a surface facing in axial direction of at least one protruding part of the fluid-pervious component.

4. Cartridge according to claim 3,
provided with a support ring (26),
wherein the sheet material covering the surface is sandwiched between the support ring and the protruding part of the fluid-pervious component.

5. Cartridge according to any one of the preceding claims,
wherein at least the axially adjoining section (23) of the housing is impervious to fluid.

6. Cartridge according to any one of the preceding claims,
wherein the sections (23) of the housing made of at least one membrane are formed from a single sheet of membrane material.

7. Cartridge according to any one of the preceding claims,
wherein the fluid-pervious component, e.g. the porous body (25), has a surface directed away from the encapsulated matter and covered by sheet material for forming at least one of the at least one membranes.

8. Cartridge according to any one of the preceding claims,
wherein the porous body (25) is made of bonded matter, e.g. bonded particulate matter.

9. Use of a fluid treatment cartridge (1) according to any one of the preceding claims, such that the fluid-pervious section of the housing including the fluid-pervious component forms the downstream end of the cartridge (1).

10. Fluid treatment system including:
- A device for forming a fluid treatment system, including a seat for holding a cartridge (1) according to any one of claims 1-8,
wherein the cartridge seat is arranged to hold the cartridge (1) in a position in which the fluid-pervious component forms the downstream end of the cartridge (1), and
- a replaceable fluid treatment cartridge (1) according to any one of claims 1-8.

11. Fluid treatment system according to claim 10,
wherein the device includes at least one clamping mechanism for holding the fluid treatment cartridge (1).

12. Fluid treatment system according to claim 11,
wherein the clamping mechanism is arranged to exert forces from opposite sides on a section (24) of the cartridge housing including at least part of the fluid-pervious component.

13. Fluid treatment system according to claim 11 or 12,
wherein the cartridge seat includes a first part (11), a second part (16) and a mechanism for advancing the second part (16) in an axial direction towards the first part (11),
wherein the first and second parts (11,16) are provided with respective parts (17,20) for supporting regions of opposing surfaces of the cartridge housing at respective lateral edges thereof.

14. Fluid treatment system according to any one of claims 10-13,
including a part defining a chamber (12) for receiving at least part of the fluid treatment cartridge (1), provided with at least one fluid-permeable window (14) at one axial end and at least one fluid-permeable window at an opposite axial end, the part including a section (11) presenting an impervious interior surface closed on itself around the axis (10) for supporting a section (23) of the housing of the fluid treatment cartridge (1) laterally.

## Patentansprüche

1. Kartusche für ein Flüssigkeitsbehandlungssystem,
wobei die Kartusche ein Gehäuse umfasst, das Materie ohne feste Form als Ganzes einkapselt, wobei die Materie zumindest ein Flüssigkeitsbehandlungsmedium (21) beinhaltet,
wobei das Gehäuse flüssigkeitsdurchlässige Abschnitte beinhaltet, die es Flüssigkeit ermöglichen, durch das Gehäuse hindurch zu verlaufen, um das Flüssigkeitsbehandlungsmedium (21) zu kontaktieren,
wobei zumindest ein Abschnitt (23) des Gehäuses durch zumindest eine Membran gebildet ist,
zumindest ein flüssigkeitsdurchlässiger Abschnitt (24) des Gehäuses zumindest eine flüssigkeitsdurchlässige Komponente beinhaltet, die an einem axialen Ende des Gehäuses bereitgestellt ist, und
zumindest ein axial angrenzender Abschnitt (23) des Gehäuses, der um die Achse herum in sich geschlossen ist, nur durch zumindest eine Membran gebildet ist, **dadurch gekennzeichnet, dass**
der zumindest eine flüssigkeitsdurchlässige Abschnitt (24) des Gehäuses, der zumindest die flüssigkeitsdurchlässige Komponente beinhaltet, ein stromabwärts gelegenes Ende der Kartusche bildet, und dadurch dass
die flüssigkeitsdurchlässige Komponente einen selbsttragenden porösen Körper (25) beinhaltet, der steif genug ist, um den Rest der Kartusche zu tragen.

2. Kartusche nach Anspruch 1,
wobei die flüssigkeitsdurchlässige Komponente in Bezug auf einen axial angrenzenden Abschnitt (23) des Gehäuses radial hervorsteht.

3. Kartusche nach Anspruch 2,
wobei der axial angrenzende Abschnitt (23) aus Blattmaterial zum Bilden zumindest einer der zumindest einen Membranen hergestellt ist, und
wobei sich das Blattmaterial erstreckt, um eine in axialer Richtung weisende Oberfläche von zumindest einem hervorstehenden Teil der flüssigkeitsdurchlässigen Komponente zu bedecken.

4. Kartusche nach Anspruch 3,
die mit einem Stützring (26) bereitgestellt ist,
wobei das die Oberfläche bedeckende Blattmaterial zwischen dem Stützring und dem hervorstehenden Teil der flüssigkeitsdurchlässigen Komponente sandwichartig eingefügt ist.

5. Kartusche nach einem der vorstehenden Ansprüche,
wobei zumindest der axial angrenzende Abschnitt (23) des Gehäuses für Flüssigkeit undurchlässig ist.

6. Kartusche nach einem der vorstehenden Ansprüche,
wobei die aus zumindest einer Membran hergestellten Abschnitte (23) des Gehäuses aus einer einzigen Blatt aus Membranmaterial gebildet sind.

7. Kartusche nach einem der vorstehenden Ansprüche,
wobei die flüssigkeitsdurchlässige Komponente, z. B. der poröse Körper (25), eine von der eingekapselten Materie weg gerichtete Oberfläche aufweist und zum Bilden von zumindest einer der zumindest einen Membran mit Blattmaterial bedeckt ist.

8. Kartusche nach einem der vorstehenden Ansprüche,
wobei der poröse Körper (25) aus gebundener Materie, z. B. gebundenen Schwebstoffen, hergestellt ist.

9. Verwendung einer Flüssigkeitsbehandlungskartusche (1) nach einem der vorstehenden Ansprüche, sodass der flüssigkeitsdurchlässige Abschnitt des Gehäuses, der die flüssigkeitsdurchlässige Komponente beinhaltet, das stromabwärts gelegene Ende der Kartusche (1) bildet.

10. Flüssigkeitsbehandlungssystem, beinhaltend:
- eine Vorrichtung zum Bilden eines Flüssigkeitsbehandlungssystems, die einen Sitz zum Halten einer Kartusche (1) nach einem der Ansprüche 1-8 beinhaltet,
wobei der Kartuschensitz angeordnet ist, um die Kartusche (1) in einer Position zu halten, in der die flüssigkeitsdurchlässige Komponente das stromabwärts gelegene Ende der Kartusche (1) bildet, und
- eine austauschbare Flüssigkeitsbehandlungskartusche (1) nach einem der Ansprüche 1-8.

11. Flüssigkeitsbehandlungssystem nach Anspruch 10,
wobei die Vorrichtung zumindest einen Klemmmechanismus zum Halten der Flüssigkeitsbehandlungskartusche (1) beinhaltet.

12. Flüssigkeitsbehandlungssystem nach Anspruch 11,
wobei der Klemmmechanismus angeordnet ist, um von gegenüberliegenden Seiten Kräfte auf einen Abschnitt (24) des Kartuschengehäuses auszuüben, das zumindest einen Teil der flüssigkeitsdurchlässigen Komponente beinhaltet.

13. Flüssigkeitsbehandlungssystem nach Anspruch 11 oder 12,
wobei der Kartuschensitz einen ersten Teil (11), einen zweiten Teil (16) und einen Mechanismus zum Vorschieben des zweiten Teils (16) in axialer Richtung zu dem ersten Teil (11) hin beinhaltet,
wobei der erste und zweite Teil (11,16) mit jeweiligen Teilen (17,20) zum Tragen von Regionen gegenüberliegender Oberflächen des Kartuschengehäuses an dessen jeweiligen seitlichen Kanten bereitgestellt sind.

14. Flüssigkeitsbehandlungssystem nach einem der Ansprüche 10-13,
das einen Teil beinhaltet, der eine Kammer (12) zum Aufnehmen von zumindest einem Teil der Flüssigkeitsbehandlungskartusche (1) definiert, die an einem axialen Ende mit zumindest einem flüssigkeitsdurchlässigen Fenster (14) und an einem gegenüberliegenden axialen Ende mit zumindest einem flüssigkeitsdurchlässigen Fenster bereitgestellt ist, wobei der Teil einen Abschnitt (11) beinhaltet, der eine um die Achse (10) herum in sich geschlossene, undurchlässige Innenoberfläche zum seitlichen Tragen eines Abschnitts (23) des Gehäuses der Flüssigkeitsbehandlungskartusche (1) präsentiert.

## Revendications

1. Cartouche pour un système de traitement de fluide,
la cartouche incluant un boîtier encapsulant une matière sans forme fixe en tant que collectif, laquelle matière inclut au moins un milieu de traitement de fluide (21),
le boîtier incluant des sections perméables aux fluides permettant à un fluide de passer à travers le boîtier pour venir en contact avec le milieu de traitement de fluide (21),
dans laquelle au moins une section (23) du boîtier est formée par au moins une membrane,
au moins une section perméable aux fluides (24) du boîtier inclut au moins un composant perméable aux fluides disposé au niveau d'une extrémité axiale du boîtier, et
au moins une section axialement attenante (23) du boîtier, fermée sur elle-même autour de l'axe, est formée uniquement par au moins une membrane, **caractérisée en ce que**
la au moins une section perméable aux fluides (24) du boîtier qui inclut au moins le composant perméable aux fluides, forme une extrémité aval de la cartouche, et **en ce que**
le composant perméable aux fluides inclut un corps poreux autoportant (25) suffisamment rigide pour supporter le reste de la cartouche.

2. Cartouche selon la revendication 1,
dans laquelle le composant perméable au fluide fait saillie radialement par rapport à une section axialement adjacente (23) du boîtier.

3. Cartouche selon la revendication 2,
dans laquelle la section axialement adjacente (23) est composée d'un matériau en feuille pour former au moins l'une de la au moins une membrane, et
dans laquelle le matériau en feuille s'étend pour recouvrir une surface orientée dans la direction axiale d'au moins une partie faisant saillie du composant perméable aux fluides.

4. Cartouche selon la revendication 3,
munie d'un anneau de support (26),
dans laquelle le matériau en feuille recouvrant la surface est pris en sandwich entre l'anneau de support et la partie faisant saillie du composant perméable aux fluides.

5. Cartouche selon l'une quelconque des revendications précédentes,
dans laquelle au moins la section axialement adjacente (23) du boîtier est imperméable aux fluides.

6. Cartouche selon l'une quelconque des revendications précédentes,
dans laquelle les sections (23) du boîtier composées d'au moins une membrane sont formées à partir d'une seule feuille de matériau de membrane.

7. Cartouche selon l'une quelconque des revendications précédentes,
dans laquelle le composant perméable aux fluides, par exemple le corps poreux (25), présente une surface dirigée à l'opposé de la matière encapsulée et recouverte d'un matériau en feuille pour former au moins une de la au moins une membrane.

8. Cartouche selon l'une quelconque des revendications précédentes,
dans laquelle le corps poreux (25) est composé de matière liée, par exemple de matière particulaire liée.

9. Utilisation d'une cartouche de traitement de fluide (1) selon l'une quelconque des revendications précédentes, de telle sorte que la section perméable aux fluides du boîtier incluant le composant perméable aux fluides forme l'extrémité aval de la cartouche (1).

10. Système de traitement de fluide, incluant :
- un dispositif pour former un système de traitement de fluide, incluant un siège pour maintenir une cartouche (1) selon l'une quelconque des revendications 1-8,
dans lequel le siège de cartouche est agencé pour maintenir la cartouche (1) dans une position dans laquelle le composant perméable aux fluides forme l'extrémité aval de la cartouche (1), et
- une cartouche de traitement de fluide remplaçable (1) selon l'une quelconque des revendications 1-8.

11. Système de traitement de fluide selon la revendication 10,
dans lequel le dispositif inclut au moins un mécanisme de serrage pour maintenir la cartouche de traitement de fluide (1).

12. Système de traitement de fluide selon la revendication 11,
dans lequel le mécanisme de serrage est agencé pour exercer des forces depuis des côtés opposés sur une section (24) du boîtier de cartouche incluant au moins une partie du composant perméable aux fluides.

13. Système de traitement de fluide selon la revendication 11 ou 12,
dans lequel le siège de cartouche inclut une première partie (11), une seconde partie (16) et un mécanisme pour faire avancer la seconde partie (16) dans une direction axiale vers la première partie (11),
dans lequel les première et seconde parties (11, 16) sont pourvues de parties respectives (17, 20) pour supporter des régions de surfaces opposées du boîtier de cartouche au niveau de ses bords latéraux respectifs.

14. Système de traitement de fluide selon l'une quelconque des revendications 10-13,
incluant une partie définissant une chambre (12) pour recevoir au moins une partie de la cartouche de traitement de fluide (1), pourvue d'au moins une fenêtre perméable aux fluides (14) au niveau d'une extrémité axiale et d'au moins une fenêtre perméable aux fluides au niveau d'une extrémité axiale opposée, la partie incluant une section (11) présentant une surface intérieure imperméable fermée sur elle-même autour de l'axe (10) pour supporter latéralement une section (23) du boîtier de la cartouche de traitement de fluide (1).
